Europäisches Patentamt

European Patent Office

Office européen des brevets

(19)

(11) **EP 1 574 816 A1**

(12) **DEMANDE DE BREVET EUROPEEN**

(43) Date de publication:
**14.09.2005 Bulletin 2005/37**

(51) Int Cl.7: **G01B 11/00**, H01L 21/66

(21) Numéro de dépôt: **05101908.1**

(22) Date de dépôt: **11.03.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **12.03.2004 FR 0450506**

(71) Demandeur: **COMMISSARIAT A L'ENERGIE ATOMIQUE**
**75752 Paris Cédex 15 (FR)**

(72) Inventeur: **Hazart, Jérôme**
**38000, GRENOBLE (FR)**

(74) Mandataire: **Poulin, Gérard et al**
**Société BREVATOME**
**3, rue du Docteur Lancereaux**
**75008 Paris (FR)**

(54) **Procede de caracterisation geometrique de structures et dispositif pour la mise en oeuvre dudit procede**

(57) Procédé de caractérisation géométrique de structures et dispositif pour la mise en oeuvre dudit procédé.

Selon l'invention, une structure, décomposable en au moins une structure élémentaire ou élément de base (30), est éclairée et fournit alors une réponse optique, on détermine au moins un paramètre géométrique de l'élément de base et on lui attribue une valeur, on met en oeuvre un algorithme de régression qui détermine des valeurs modifiées du ou des paramètres, en vue de rendre l'écart entre la réponse théorique (32) de l'élément de base et la réponse acquise (34) au plus égal à un seuil, et d'obtenir l'image de la structure, et tant que l'écart entre les réponse acquise et théorique n'est pas satisfaisant, on effectue de nouvelles subdivisions du ou des éléments de base.

FIG. 4

Printed by Jouve, 75001 PARIS (FR)

**Description**

**DOMAINE TECHNIQUE**

La présente invention concerne un procédé de caractérisation géométrique de structures ainsi qu'un dispositif pour la mise en oeuvre de ce procédé.

L'invention propose une mesure qui peut s'apparenter à la reconstruction d'une image à partir de diverses données expérimentales.

Elle s'applique tout particulièrement au contrôle des dimensions d'objets sub-micrométriques périodiques à l'aide d'un système optique.

Plus précisément, l'invention peut servir à la caractérisation géométrique de motifs régulièrement espacés, tels que des « lignes » en micro-électronique. Cette technique de caractérisation est appelée « scattérométrie » (en anglais "scatterometry") car il s'agit d'une mesure effectuée à l'aide d'un champ électromagnétique diffracté.

A ce sujet, on consultera le document [1] qui, comme les autres documents cités par la suite, est mentionné à la fin de la présente description.

Précisons que l'invention permet de caractériser la forme de "lignes" en microélectronique, sans utiliser un modèle géométrique prédéfini.

Nous appellerons « spectre », ou « signature », toute réponse optique d'un objet, ou structure, que l'on veut mesurer, que la technique de mesure utilisée soit de type réflectométrique, goniométrique, ellipsométrique ou spectrométrique. L'invention utilise un ensemble de techniques permettant de donner, de façon rapide et sûre, les dimensions et la forme de cet objet.

Un aspect important de l'invention concerne le traitement des données optiques que l'on obtient par les mesures effectuées.

**ÉTAT DE LA TECHNIQUE ANTÉRIEURE**

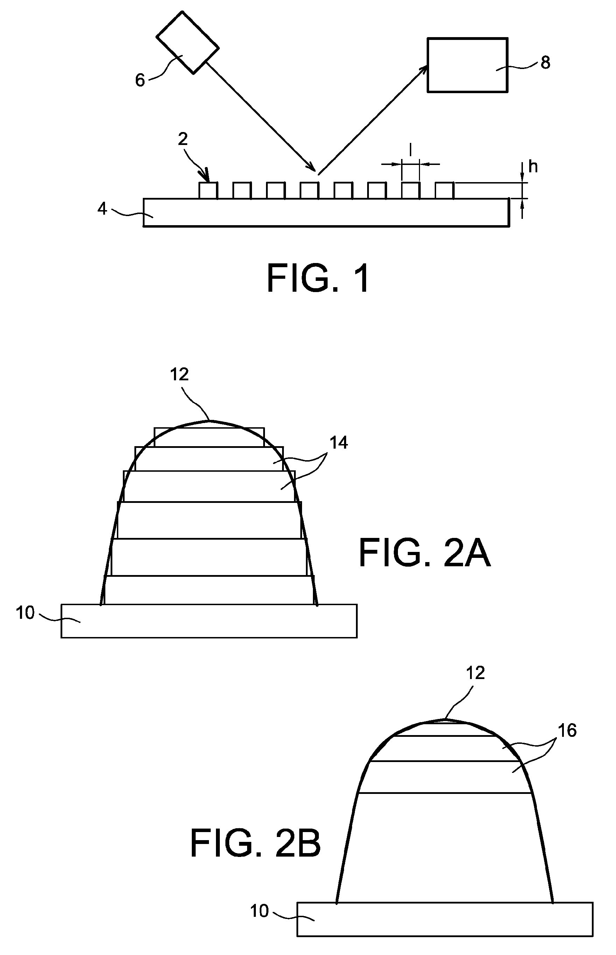

La figure 1 illustre schématiquement le principe d'une mesure optique qui est utilisable dans l'invention.

On y voit un motif périodique 2 que l'on veut caractériser en ce qui concerne sa hauteur h et sa largeur 1. Ce motif, qui est formé sur un substrat 4, est éclairé par la lumière émise par une source lumineuse 6. La lumière réfléchie est analysée par des moyens appropriés 8 permettant de déterminer certains paramètres opto-géométriques du motif ainsi éclairé, ces paramètres étant, comme on l'a vu, la hauteur et la largeur dans l'exemple considéré.

La détermination des paramètres repose sur l'hypothèse que si l'on trouve théoriquement un objet idéal, possédant un spectre de diffraction égal au spectre mesuré, alors l'objet réel et l'objet idéal sont égaux.

Il n'existe pas de méthode directe pour remonter des spectres de diffraction à l'objet qui a diffracté la lumière de façon générale : on dit que le problème est mal conditionné. Puisque l'on ne peut voir l'objet (il est trop petit, ce qui équivaut à dire que le problème est mal conditionné), trouvons un objet idéal qui diffracte la lumière de la même façon que l'objet réel à caractériser. Ayant l'objet idéal, nous aurons donc une mesure de l'objet réel.

A partir de là, deux grandes méthodes de recherche existent : la méthode des bibliothèques et la méthode itérative.

Considérons d'abord la méthode des bibliothèques qui est en fait une méthode de tabulation.

Les objets sont définis par un ensemble de paramètres géométriques. Par exemple, pour un profil trapézoïdal, ce profil est décrit par sa hauteur, sa largeur à mi-hauteur et l'angle de sa pente. On calcule alors le spectre diffracté de chaque objet faisant partie d'une grande collection d'objets, dans laquelle les paramètres géométriques varient. Puis, on sélectionne l'objet idéal qui a donné le spectre le plus proche du spectre expérimental.

Cette méthode présente le gros inconvénient de calculer les spectres respectifs d'un grand nombre d'objets idéaux pour avoir une bonne chance de trouver une solution correcte, d'où un grand temps de calcul pour la préparation de la bibliothèque.

De plus, cette bibliothèque doit être recalculée si le modèle de l'objet idéal est modifié (par exemple, en passant d'un modèle rectangulaire à un modèle trapézoïdal), d'où une méthode susceptible de nécessiter beaucoup de calculs.

Considérons maintenant la méthode itérative proprement dite.

Là encore, un objet est défini par un ensemble de paramètres opto-géométriques. On part d'un objet idéal et l'on suppose qu'il est proche de l'objet réel, que l'on veut caractériser. Le spectre de cet objet idéal est calculé. De la différence entre ce spectre et le spectre expérimental on déduit la variation qu'il faut apporter au modèle pour obtenir la coïncidence des spectres. Cela se fait de façon itérative, jusqu'à ce que les spectres coïncident ou que l'on ne puisse pas trouver de meilleur modèle. Dans la suite, nous considérerons principalement cette méthode itérative.

Une telle méthode ne donne pas toujours une « mesure », ou solution, unique. C'est l'une des difficultés typiques des problèmes dits « inverses ». Cette difficulté est d'autant plus préoccupante que le système à analyser est caractérisé par un grand nombre de paramètres.

On a déjà envisagé une technique permettant de contourner en partie la difficulté mentionnée plus haut grâce une hiérarchisation des paramètres. Selon cette technique, les paramètres les plus significatifs sont d'abord approximativement déterminés puis on en déduit les paramètres secondaires, et ainsi de suite.

Cette technique peut être appelée "méthode des séquences", chaque « séquence » étant un ajustement des paramètres géométriques, pour un nombre fini et fixé de ces paramètres. D'une séquence à une autre, des paramètres sont ajoutés. Une séquence est notée $\{x_1, x_2, ...x_m\}$. Cela signifie que les m variables géométriques $x_1, x_2, ... x_m$ du profil sont ajustées au mieux. La séquence suivante est par exemple $\{x_1, x_2, ... x_m'\}$, avec m'>m.

Quoiqu'il en soit, avec cette méthode des séquences, des problèmes importants subsistent. En effet, on ne sait pas exactement quand passer d'une séquence à l'autre pour optimiser le temps de calcul.

De plus, il n'est par toujours évident de hiérarchiser les variables géométriques. Par exemple, pour un profil à 4 variables, on ne sait pas s'il vaut mieux utiliser la séquence $\{x_1, x_2\}$ puis la séquence $\{x_1, x_2, x_3, x_4\}$ ou les séquences successives $\{x_1, x_2\}$, $(x_1 x_2, x_3)$ et $\{x_1, x_2, x_3, x_4\}$. La question reste ouverte et dépend de l'amplitude même des variables que l'on recherche.

En tous cas, il faut a priori fixer un modèle géométrique, c'est-à-dire savoir par exemple que le profil est trapézoïdal et n'a pas d'autres défauts notables. Ceci est très contraignant du point de vue de l'utilisateur, qui ne sait pas toujours ce que vont fournir les moyens d'analyse.

## EXPOSÉ DE L'INVENTION

La présente invention a pour but de résoudre les problèmes précédents.

Elle a pour objet un procédé de caractérisation géométrique d'une structure, dans lequel on éclaire la structure, cette structure fournissant alors une réponse optique, ce procédé permettant d'obtenir une image bidimensionnelle ou tridimensionnelle de la structure à partir de la réponse optique de cette structure, ce procédé étant caractérisé en ce qu'il comprend les étapes successives suivantes :

1) on acquiert la réponse optique de la structure,
2) on définit une structure géométrique élémentaire, appelée élément de base, apte à permettre la décomposition de la structure à caractériser en un ou plusieurs éléments de base,
3) on détermine au moins un paramètre géométrique de l'élément de base et l'on attribue une valeur à chaque paramètre géométrique,
4) on met en oeuvre une régression des valeurs du ou des paramètres géométriques de l'élément de base à partir d'un algorithme de régression apte à déterminer des valeurs modifiées de ce ou ces paramètres géométriques, en vue de rendre l'écart entre la réponse optique théorique de l'élément de base, dont on a déterminé le ou les paramètres géométriques, et la réponse optique acquise de la structure au plus égal à une valeur de seuil déterminée, et
5) si cet écart entre la réponse optique théorique et la réponse optique acquise est supérieur à cette valeur de seuil, on réalise une nouvelle subdivision d'un ou plusieurs éléments de base en au moins deux autres éléments de base, et pour chaque élément de base on recommence le procédé à partir de l'étape 3) de celui-ci, si l'écart est inférieur ou égal à la valeur de seuil on assemble l'ensemble des éléments de base avec les valeurs déterminées de leurs paramètres géométriques pour obtenir une image de la structure, et si l'écart est supérieur à la valeur de seuil on recommence le procédé à l'étape 5).

Selon un mode de mise en oeuvre particulier du procédé objet de l'invention, la réponse optique de la structure est un spectre ellipsométrique ou réflectométrique ou goniométrique ou une image de cette structure.

L'élément de base peut être choisi parmi les carrés, les rectangles, les trapèzes et les triangles ou tout autre élément de base apte à permettre la décomposition de la structure.

Selon un premier mode de mise en oeuvre particulier de l'invention, l'élément de base est un carré et l'on utilise la longueur des côtés de ce carré en tant que paramètre géométrique.

Selon un deuxième mode de mise en oeuvre particulier de l'invention, l'élément de base est un rectangle et l'on utilise la longueur et/ou la largeur de ce rectangle en tant que paramètres géométriques.

Selon un troisème mode de mise en oeuvre particulier de l'invention, l'élément de base est un trapèze et l'on utilise la hauteur et/ou au moins une des longueurs respectives des grande et petite bases de ce trapèze en tant que paramètres géométriques.

Selon un quatrième mode de mise en oeuvre particulier de l'invention, l'élément de base est un triangle et l'on utilise la base et/ou un angle adjacent à cette dernière et/ou la hauteur de ce triangle, ou la base et/ou au moins un des deux angles adjacents à cette dernière, en tant que paramètres géométriques.

Les paramètres définis précédemment pour chaque type d'élément de base sont donnés à titre de modes de réalisation avantageux mais bien entendu ils peuvent être définis autrement.

Selon un mode de mise en oeuvre préféré du procédé objet de l'invention, on utilise une méthode d'analyse rigoureuse des ondes couplées dite méthode "RCWA" (voir par exemple le document [2]) ou une méthode différentielle (voir par exemple le document [3]) pour déterminer la réponse optique théorique de l'élément de base.

La présente invention a également pour objet un dispositif de caractérisation géométrique d'une structure, ce dispositif comprenant :

- des moyens pour éclairer la structure, cette structure fournissant alors une réponse optique, et
- des moyens pour détecter et traiter cette réponse optique,

ce dispositif étant caractérisé en ce que les moyens pour détecter et traiter la réponse optique sont prévus pour effectuer les étapes successives suivantes :

1) acquérir la réponse optique de la structure,
2) définir une structure géométrique élémentaire, appelée élément de base, apte à permettre la décomposition de la structure à caractériser en un ou plusieurs éléments de base,
3) déterminer au moins un paramètre géométrique de l'élément de base et attribuer une valeur à chaque paramètre géométrique,
4) mettre en oeuvre une régression des valeurs du ou des paramètres géométriques de l'élément de base à partir d'un algorithme de régression apte à déterminer des valeurs modifiées de ce ou ces paramètres géométriques, en vue de rendre l'écart entre la réponse optique théorique de l'élément de base, dont on a déterminé le ou les paramètres géométriques, et la réponse optique acquise de la structure au plus égal à une valeur de seuil déterminée, et
5) si cet écart entre la réponse optique théorique et la réponse optique acquise est supérieur à cette valeur de seuil, réaliser une nouvelle subdivision d'un ou plusieurs éléments de base en au moins deux autres éléments de base, et pour chaque élément de base recommencer les étapes à partir de l'étape 3), si l'écart est inférieur ou égal à la valeur de seuil, assembler l'ensemble des éléments de base avec les valeurs déterminées de leurs paramètres géométriques pour obtenir une image de la structure, et si l'écart est supérieur à la valeur de seuil recommencer les étapes à partir de l'étape 5).

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement le principe d'une mesure optique qui est utilisable dans l'invention et a déjà été décrite,
- les figures 2A et 2B illustrent schématiquement le processus de découpage d'un profil trapézoïdal arrondi d'une ligne formée sur un substrat, ce profil étant découpé en rectangles dans le cas de la figure 2A et en trapèzes dans le cas de la figure 2B,
- la figure 3 illustre schématiquement un algorithme de régression pour la scattérométrie, qui est connu dans l'état de la technique,
- la figure 4 illustre schématiquement un algorithme de régression pour la scattérométrie, qui est utilisable dans la présente invention,
- les figures 5A à 5D illustrent schématiquement un exemple de l'invention, permettant de caractériser un motif de lithographie,
- la figure 6 illustre schématiquement un exemple de géométrie de grille "notchée" (en anglais "notched grid"),
- les figures 7A à 7F illustrent schématiquement un premier exemple de l'invention, permettant la caractérisation d'une grille "notchée",
- les figures 8A à 8F illustrent schématiquement un deuxième exemple de l'invention, permettant la caractérisation d'une grille "notchée", et
- la figure 9 illustre schématiquement l'organigramme d'un procédé conforme à l'invention.

**EXPOSÉ DÉTAILLÉ DE MODES DE RÉALISATION PARTICULIERS**

En scattérométrie, notamment dans le domaine de la microélectronique, la méthode la plus utilisée pour calculer le spectre d'un objet théorique est la méthode appelée RCWA, c'est-à-dire la méthode d'analyse rigoureuse des ondes couplées (en anglais "rigorous coupled wave analysis") (voir par exemple le document [2]).
D'autres méthodes existent (par exemple la méthodes différentielle, la méthode de Chandezon, et les méthodes faisant appel aux fonctions de Green) mais la RCWA s'est très rapidement imposée du fait de sa simplicité, de sa rapidité et de sa quasi-universalité.
Bien qu'elle puisse être mise en oeuvre avec d'autres méthodes, la présente invention est extrêmement bien adaptée à la RCWA (voir le document [2]) et à la méthode différentielle (voir le document [3], chap. 4), comme on le verra par la suite.
Dans le cas de la méthode RCWA, lorsque le profil d'une ligne, que l'on veut caractériser, n'est pas rectangulaire, ce profil est découpé en tranches parallèlement au plan du substrat sur lequel est formée la ligne. Lorsque l'on utilise la méthode RCWA l'élément de base est donc le rectangle.
Mais, dans le cas de la méthode différentielle, l'élément de base est de préférence est le trapèze. La forme que l'on veut caractériser est donc découpée en trapèzes (voir par exemple le document [6]).
Si les tranches sont suffisamment petites, alors la signature de l'objet découpé est identique à la signature de l'objet parfait, non découpé (la méthode des fonctions de Green ou la méthode de Chandezon ne faisant pas appel, remarquons-le, au découpage du profil).
Ainsi le découpage est-il un artefact de calcul qui permet l'utilisation de la méthode RCWA ou de la méthode différentielle, méthodes qui ne traitent que des tranches. Notons que dans chaque tranche, l'indice de réfraction est invariant avec la hauteur pour la méthode RCWA et que le temps de calcul est une fonction linéaire du nombre de tranches ou couches.

Les figure 2A et 2B illustrent schématiquement le processus de découpage d'un profil trapézoïdal arrondi d'une ligne qui est formée sur un substrat 10. Le profil non découpé a la référence 12. Sur la figure 2A, ce profil est découpé en rectangles 14 de façon a être traité par la méthode RCWA. Sur la figure 2B, le profil est découpé en trapèzes 16 pour être traité par la méthode différentielle.

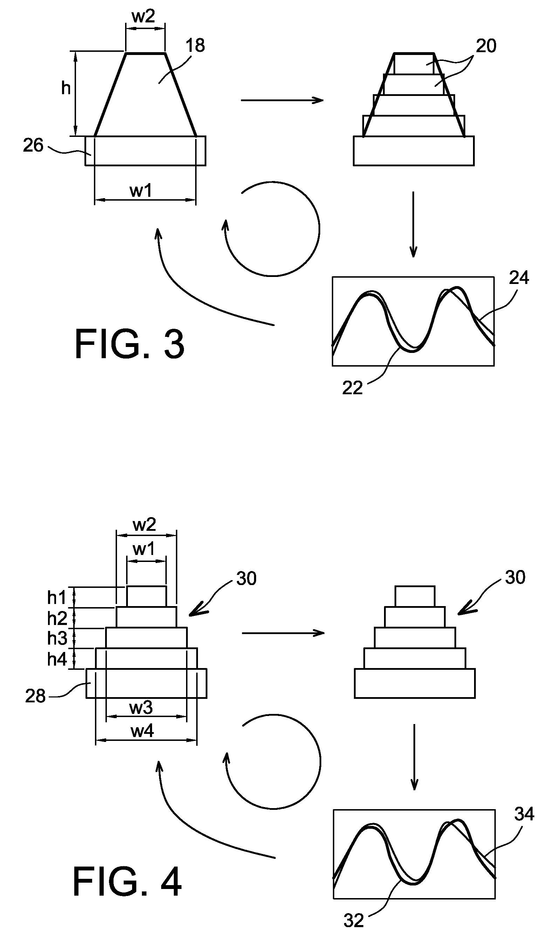

Dans ce qui suit, on montre de façon très générique comment sont construits la quasi-totalité des algorithmes de régression en scattérométrie. On se reportera à la figure 3 qui illustre schématiquement un exemple d'un processus classique d'ajustement.

La géométrie étudiée 18, définie par quelques paramètres géométriques, est découpée en rectangles 20 afin d'être traitée par la méthode RCWA. La signature 32 de l'objet modélisé est calculée puis comparée à la signature expérimentale 24. De la différence entre ces signatures on déduit une variation des paramètres géométriques.

On reprend alors le processus avec une nouvelle géométrie définie par les paramètres modifiés et ainsi de suite, jusqu'à ce que la différence entre la signature théorique et la signature expérimentale soit inférieure à un seuil prédéfini.

Notons que dans l'exemple considéré, le profil de l'objet étudié, qui est formé sur un substrat 26, est un trapèze ; ce dernier est défini par trois paramètres : sa grande base, de longueur initiale w1, sa petite base, de longueur initiale w2, et sa hauteur, de valeur initiale h.

Ainsi, dans l'art antérieur, un type de géométrie est fixé dès le départ (il s'agit par exemple d'un rectangle ou d'un trapèze) et l'on ajuste les paramètres de cette géométrie en fonction du résultat de la comparaison entre la signature de l'objet idéal et la signature expérimentale.

Lorsque l'on utilise la méthode RCWA ou la méthode différentielle, il faut, comme on l'a vu, passer par une phase intermédiaire de découpage.

Cette phase de découpage est obligatoire et semble être plus un inconvénient, dont il faut s'accommoder lorsque l'on utilise de telles méthodes numériques, qu'une étape utile.

Dans la présente invention, on utilise astucieusement cette phase de découpage en considérant que l'objet géométrique que l'on recherche est l'objet découpé lui-même. Si l'on veut faire le lien entre la technique classique et un procédé conforme à l'invention, on dira que dans ce procédé l'objet de départ est un empilement de rectangles et que le nombre de paramètres est le double du nombre de rectangles.

La phase initiale de découpage n'a donc pas lieu dans ce procédé car l'objet est déjà constitué de rectangles qui sont directement exploitables par la RCWA. Cet aspect de l'invention est schématiqument illustré par la figure 4. On y voit un processus d'ajustement à l'aide d'un objet qui est formé sur un substrat 28 et dont le profil est défini par une famille de rectangles 30.

Dans l'exemple considéré, cette famille comporte quatre rectangles, chacun de ceux-ci étant caractérisé par une hauteur hi et par une largeur wi, i allant de 1 à 4.

On passe, sans rien faire, d'une géométrie définie par les paramètres (hi, wi) à une géométrie découpée. Ensuite, comme on l'a vu plus haut, on calcule la signature théorique 32 et on la compare à la signature expérimentale 34. De la différence entre ces signatures, on déduit une variation des paramètres.

On reprend alors le processus avec une nouvelle géométrie définie par les paramètres modifiés et ainsi de suite, jusqu'à ce que la différence entre la signature théorique et la signature expérimentale soit inférieure à un seuil prédéfini.

A première vue, l'utilisation d'objets définis par une famille de rectangles ne présente aucun avantage. Au contraire, on passe d'un problème à trois variables, dans l'exemple de la figure 3, à un problème à huit variables, dans l'exemple de la figure 4.

Néanmoins, il en résulte un avantage important : les suites de séquences d'ajouts de variables deviennent alors évidentes étant donné qu'un objet à *n* rectangles est plus complexe qu'un objet à m rectangles si n est supérieur à m (on se reportera à l'exemple de l'invention, qui est donné dans ce qui suit).

L'avantage de l'utilisation des séquences d'ajouts de variables en découle aussitôt : il y a moins de problèmes dus aux solutions multiples, du fait de l'augmentation du nombre de paramètres de la géométrie, et le temps de calcul est réduit (on se reportera également à l'exemple de l'invention qui est donné ci-après).

On va maintenant exposer l'invention dans un cas simple qui est relatif à un motif lithographique et dans lequel on utilise la méthode RCWA et un élément de base rectangulaire.

On ne fixe pas de profil final pour l'objet (par exemple un trapèze ou un trapèze arrondi). La régression se fait toujours à l'aide de séquences mais le nombre de séquences n'est pas fixé (il peut être très grand), contrairement aux méthodes de recherche pour lesquelles le profil final est fixé. L'arrêt de la régression a lieu lorsque l'écart entre le spectre théorique et le spectre mesuré est suffisamment faible, l'écart-limite étant fixé par l'utilisateur.

Le principe de base des itérations est le suivant :

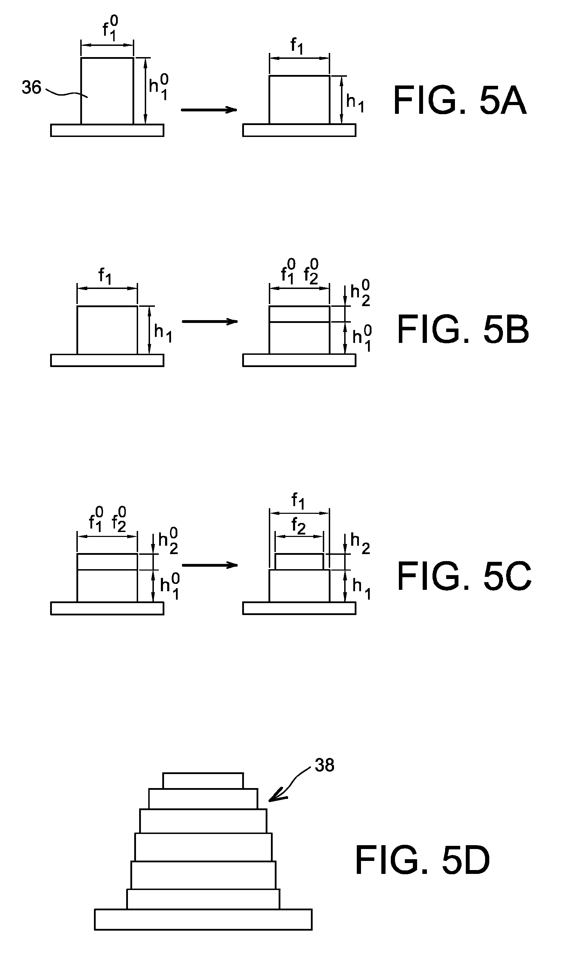

1. On part d'un objet rectangulaire 36 (voir la figure 5A) qui est assez proche de l'objet de cotes $h_1^0$ (hauteur) et $f_1^0$ (largeur) que l'on doit trouver (et qui est par exemple défini par le procédé de fabrication) et, à l'aide d'un programme de régression, on ajuste la hauteur et la largeur du rectangle pour faire coïncider au mieux le spectre théorique et le spectre expérimental. Ceci constitue la première séquence, qui est notée $\{h_1, f_1\}$. Cette séquence est connue dans l'état de la technique.

2. Une fois le meilleur rectangle trouvé (dont la hauteur vaut $h_1$ et la largeur $f_1$), on scinde ce rectangle en plusieurs rectangles, par exemple deux rectangles (figure 5B). Les paramètres (hauteur et largeur) de ces deux rectangles sont notés $h_k^0$ et $f_k^0$, où k prend les valeurs 1 et 2.

3. On ajuste les 2 x 1 variables $h_k^0$ et $f_k^0$, où 1 est le nombre de tranches (ici 1 vaut 2), pour faire coïncider au mieux le spectre théorique et le spectre expérimental pour chaque tranche. Cet ajustement conduit aux paramètres $(h_1, f_1)$ et $(h_2, f_2)$ pour les tranches (figure 5C).

4. On répète les opérations de subdivision et d'ajustement jusqu'à ce que la théorie et l'expérience soient en accord. On obtient ainsi un profil du genre du profil 38 de la figure 5D.

En conclusion, la solution trouvée est un ensemble de rectangles qui forment une image du profil et non un ensemble de paramètres d'un profil géométrique fixé.

On décrit ci-après quatre modes de réalisation particuliers du procédé objet de l'invention.

Deux de ces modes de réalisation utilisent des rectangles comme éléments de base et les deux autres modes de réalisation utilisent des trapèzes. En tant que méthode de calcul de champ, on utilise la méthode RCWA dans le cas des rectangles, et la méthode différentielle dans le cas des trapèzes (mais cela n'est pas nécessaire).

Ces modes de réalisation sont décrits pour la caractérisation de deux structures importantes, à savoir les profils de résine (en anglais "resist") lithographiés et les grilles "notchées" c'est-à-dire crantées (en anglais "notched grids").

Les algorithmes de régression utilisables sont nombreux. Nous n'en citerons que quelques uns, qui sont déjà largement utilisés en scattérométrie :

- la méthode du Simplex (voir le chapitre 10 du document [4]),
- la méthode de Levenberg-Marquardt (voir le chapitre 10 du document [4]), et
- la méthode de Drège (voir le document [5]).

L'utilisation de l'un ou l'autre d'entre eux ne modifie en rien l'invention.

Considérons d'abord l'utilisation d'éléments de base rectangulaires et la caractérisation de formes de lignes de résine.

Ce type de profil se rencontre très souvent lors de l'insolation et de la gravure de motifs de résine (par un faisceau d'électrons ou par photolithographie). La caractérisation de cette étape est fondamentale en microélectronique car d'elle dépend une bonne part du reste du procédé de fabrication des motifs. En effet, il s'agit en général de la première étape de ce procédé.

Le mode de réalisation correspondant a déjà été décrit plus haut en faisant référence aux figures 5A à 5D. L'objet primitif est constitué d'un seul rectangle. Pour ce qui est de la subdivision des différents rectangles, on pourra choisir, entre chaque séquence, par exemple :

(1) de découper tous les rectangles sans discrimination ou

(2) de découper le rectangle dont la hauteur est la plus grande ou

(3) de découper le rectangle dont une variation induit la plus grande variation sur la signature globale ou

(4) de découper les rectangles dont la taille est supérieure àune certaine valeur (il est inutile de découper un rectangle qui est déjà très petit) ou

(5) d'effectuer cette opération sur une sous-famille de rectangles.

En général, on choisira plutôt la solution (3).

Toujours dans le cas de l'utilisation d'éléments de base rectangulaires, considérons maintenant la caractérisation de grilles notchées.

Depuis quelques années, ces structures sont devenues d'une grande importance en microélectronique. Ce sont des lignes qui sont constituées d'une base très fine (ayant quelques dizaines de nanomètres de large) sur laquelle repose une ligne plus large, dont la forme est plus ou moins arrondie.

En pratique, deux informations sont intéressantes, à savoir les tailles respectives des parties supérieure et inférieure et la forme de la partie supérieure. Un gros problème pour les utilisateurs finaux est de trouver un bon modèle géométrique pour la forme de la partie supérieure.

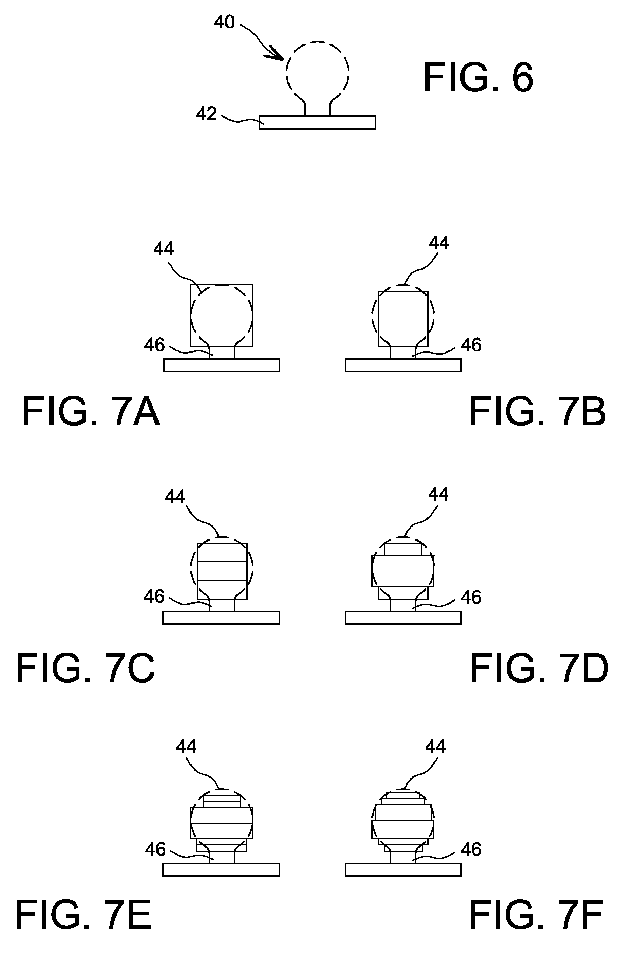

On se reportera à la figure 6 qui montre un exemple de géométrie de grille « notchée » 40, formée sur un substrat 42.

Pour une telle géométrie, les séquences d'un procédé conforme à l'invention sont faciles à déterminer. On se reportera aux figures 7A à 7F qui illustrent schématiquement un ensemble de telles séquences, permettant la caractérisation d'une grille "notchée". La géométrie de la grille en pointillés 44 n'est là que pour aider à la compréhension des figures 7A à 7F. Elle n'intervient en aucun cas dans les séquences.

La première séquence comprend une phase d'initialisation (figure 7A) suivie d'une phase d'ajustement (figure 7B) ; la deuxième séquence comprend une phase de subdivision (figure 7C) suivie d'une phase d'ajustement (figure 7D) ; la troisième séquence comprend une nouvelle phase de subdivision (figure 7E) suivie d'une nouvelle phase d'ajustement (figure 7F) ; et ainsi de suite.

Au bout de quelques séquences, on obtient une famille de rectangles qui tend à s'ajuster à la forme géométrique recherchée.

Dans ce mode de réalisation, on notera les faits suivants :

- la base 46 n'est jamais découpée ; en effet, les signatures optiques sont souvent peu affectées par la base de la géométrie (surtout si cette base est de faible taille) ; et
- lors de la deuxième séquence, le rectangle supérieur est découpé en trois rectangles car les géométries de type circulaire sont beaucoup mieux décomposées en mailles (en anglais "unit cells") avec trois rectangles qu'avec deux rectangles ; on a donc pu sauter la séquence avec deux rectangles.

Considérons maintenant l'utilisation d'éléments de base trapézoïdaux.

En effet, le même type de structure que précédemment peut-être étudié en suivant le même principe, mais avec un autre type de motif élémentaire, par exemple le trapèze. Un objet est représenté de façon plus fine avec des éléments trapézoïdaux qu'avec des rectangles (à nombre d'éléments constant). Cependant, cela conduit à des temps de calcul plus longs puisque l'on utilise alors la méthode différentielle, qui est plus complexe. C'est pourquoi la méthode RCWA est la plus utilisée.

Il faut cependant noter que tous les principes énoncés plus haut peuvent être mis en oeuvre avec un élément de base trapézoïdal, la seule différence étant que, dans ce cas, l'élément de base est décrit par trois paramètres, par exemple la hauteur $h$, la largeur $w_b$ de la grande base et la largeur $w_t$ de la petite base du trapèze.

On se reportera aux figures 8A à 8F qui illustrent schématiquement un autre ensemble de séquences d'un procédé conforme à l'invention, permettant la caractérisation d'une grille "notchée". La géométrie de la grille en pointillés 48 n'est là que pour aider à la compréhension des figures 8A à 8F. Elle n'intervient en aucun cas dans les séquences.

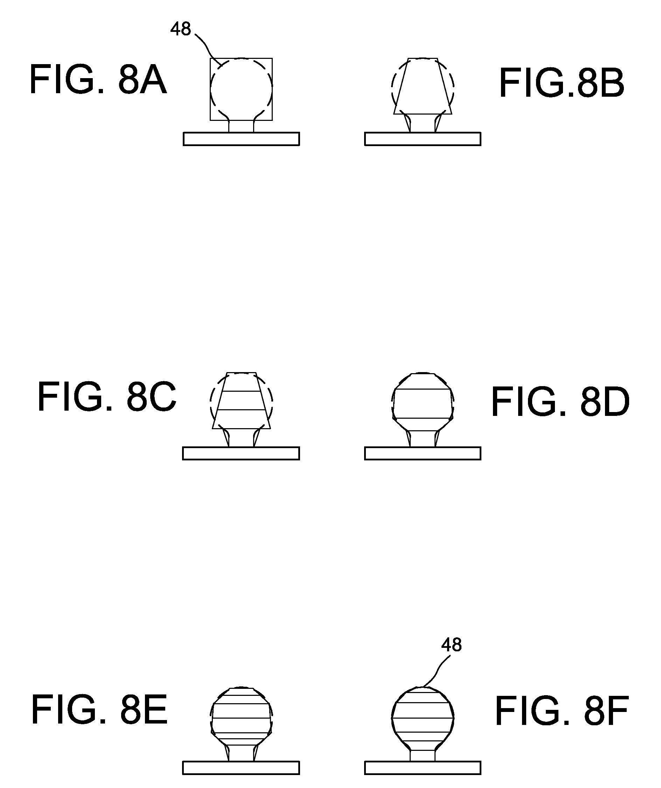

La première séquence comprend une phase d'initialisation (figure 8A) suivie d'une phase d'ajustement (figure 8B) ; la deuxième séquence comprend une phase de subdivision (figure 8C) suivie d'une phase d'ajustement (figure 8D) ; la troisième séquence comprend une nouvelle phase de subdivision (figure 8F) suivie d'une nouvelle phase d'ajustement (figure 8F) ; et ainsi de suite.

Au bout de quelques séquences, on obtient une famille de trapèzes qui tend à s'ajuster à la forme géométrique recherchée.

Deux différences notables existent entre la présente invention et l'art antérieur.

D'une part, le concept de la scattérométrie par ajustement (qu'il s'agisse de régressions ou de recherches dans une bibliothèque) est complètement différent : on ne cherche plus l'ensemble des paramètres d'une forme fixée, paramètres qui permettent un ajustement des spectres, mais le modèle géométrique lui-même qui est défini par un ensemble d'éléments de base.

Ceci est très important du point de vue de l'utilisateur car, concrètement, ce dernier ne sait pas toujours quelle va être la forme de l'objet qu'il souhaite caractériser. S'il choisit un modèle trop simple, les résultats seront très approximatifs; et s'il choisit un modèle trop complexe, les résultats peuvent être faux.

Avec la présente invention, le modèle s'adapte au fur et à mesure de la convergence.

D'autre part, du point de vue de la méthode de résolution RCWA, le découpage en tranches est toujours perçu comme un inconvénient dans l'art antérieur, puisque les algorithmes de découpage sont complexes et que l'on se demande toujours si le découpage fixé par l'utilisateur est suffisant.

Dans la présente invention, cet inconvénient se transforme en avantage car c'est du découpage lui-même que résulte l'information. La méthode RCWA est donc très bien adaptée à cette méthode de "mesure de forme".

Les avantages de la présente invention sont ainsi les suivants :

- le modèle géométrique n'est pas fixé, ce qui est très pratique pour l'utilisateur final ;
- à la fin du procédé, l'utilisateur n'obtient pas une liste de paramètres d'un modèle géométrique prédéfini mais une image du profil ;
- le modèle s'affine au fur et à mesure et le nombre de tranches est, par construction, toujours optimal ; ce n'est pas le cas pour les méthodes classiques dans lesquelles le modèle de départ peut être très complexe et le nombre de tranches peut donc être très grand, d'où un temps de calcul plus long ;
- on évite - dans une certaine mesure - le problème des minima locaux, problème qui intervient lorsque le nombre de paramètres est grand, car ce nombre augmente au fur et à mesure ;
- la résolution de la géométrie finale est théoriquement illimitée car le nombre des rectangles qui décrivent la géométrie peut être augmenté à volonté ; et
- si la méthode de calcul des signatures est la méthode RCWA, le profil est donc prédécoupé et il est par conséquent optimal.

La suite des séquences qui est illustrée par les figures 7A à 7F n'est pas la plus générale : rien n'empêche de commencer avec plusieurs rectangles si l'on a déjà des informations sur le profil. Par exemple, pour les lignes "notchées" pour lesquelles la base du profil est très réduite, on peut commencer l'algorithme avec deux ou trois rectangles.

En outre, selon des modes de réalisation particuliers du procédé objet de l'invention, qui sont très avantageux pour la scattérométrie,

(a) on utilise la RCWA, méthode plus rapide et plus simple que la méthode différentielle (mais nécessitant plus d'éléments de base) ;
(b) on utilise la méthode de régression de Drège ; et
(c) on stocke les propriétés électromagnétiques des rectangles.

En effet, la méthode RCWA utilise les rectangles comme objets de base. Elle est donc bien adaptée à la mise en oeuvre d'un algorithme conforme à l'invention.

Dans la méthode de régression de Drège (voir le document [5]), l'évaluation de la différence (point à point) entre les signatures expérimentale et théorique, combinée à l'évaluation de la dérivée des signatures lorsque l'un des paramètres change, mène à une convergence très rapide dans une majorité de cas.

Il convient cependant de noter que cette méthode nécessite de faire un calcul électromagnétique complet chaque fois que l'on veut calculer une dérivée, ce qui prend du temps sauf dans le cas des rectangles : comme on le verra plus loin, la dérivée de la matrice de diffraction d'un rectangle par rapport à la hauteur ou par rapport à la largeur de ce rectangle peut être calculée en un temps très réduit.

Le stockage des propriétés électromagnétiques des rectangles permet d'accélérer notablement le calcul. Ce stockage repose sur le fait que certaines propriétés électromagnétiques des rectangles, à savoir les valeurs propres (en anglais "eigenvalues") et les vecteurs propres (en anglais "eigenvectors") du champ électromagnétique, sont indépendantes de la hauteur des rectangles.

Il est alors avantageux de calculer et de stocker dans une bibliothèque les valeurs propres et les vecteurs propres des rectangles que l'on veut utiliser. Lorsque l'on a besoin des valeurs propres et des vecteurs propres d'un rectangle, il suffit alors d'aller les chercher dans la bibliothèque où ils sont stockés.

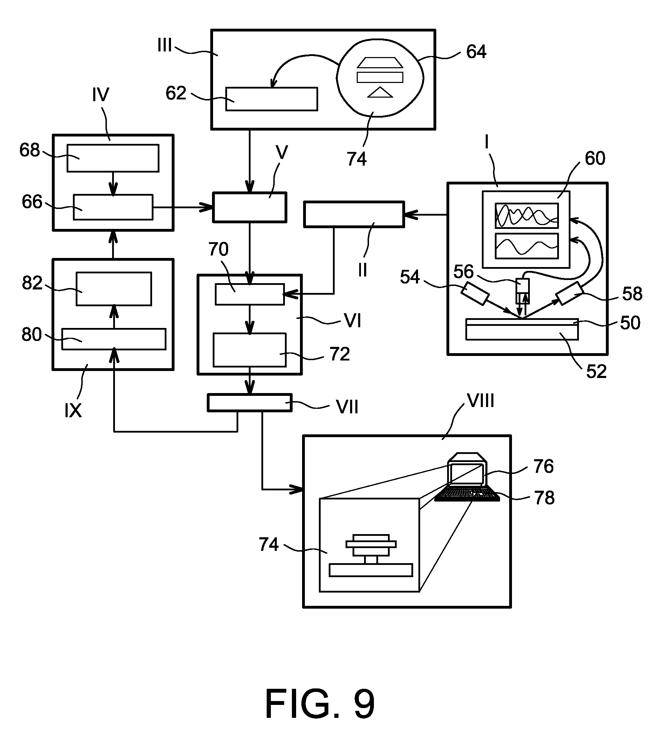

La figure 9 montre l'organigramme d'un procédé conforme à l'invention sous forme de blocs.

Le bloc I illustre schématiquement l'acquisition de données au moyen d'un dispositif optique approprié. Une structure 50, que l'on veut caractériser, est formée sur un substrat 52. Une source lumineuse 54 permet d'éclairer la structure 50. La lumière réfléchie par cette dernière est détectée par un réflectomètre 56 et par un ellipsomètre 58. Les signaux fournis par ces derniers sont transmis à un spectromètre 60.

Le bloc II symbolise les mesures $\Psi$ ainsi obtenues et les conditions de mesure $\theta$ (angle d'incidence de la lumière sur la structure) et $\lambda$ (longueur d'onde de cette lumière), que l'on mémorise.

Dans le bloc III, le sous-bloc 62 représente le choix d'un élément de base à partir d'une bibliothèque 64 d'éléments.

Dans le bloc IV, le sous-bloc 66 symbolise l'attribution de valeurs aux variables, à partir d'information supposées 68 sur l'objet à caractériser.

Le bloc V symbolise les variables et les éléments considérés et les valeurs attribuées aux variables.

Le bloc VI montre un sous-bloc 70 d'ajustement des valeurs de variables, à partir des informations des blocs II et V, et un sous-bloc 72 d'éléments de variables et de nouvelles valeurs de variables résultant de l'ajustement.

Ce bloc VI est un bloc de régression qui n'est pas détaillé car il utilise des procédures standard de régression dont il a d'ailleurs déjà été question plus haut.

Le bloc VII symbolise un test (comparaison de la différence entre la réponse optique théorique et la réponse optique expérimentale à un seuil prédéfini) permettant de savoir si l'ajustement est satisfaisant (différence inférieure au seuil).

Si c'est le cas, on va au bloc VIII ; on considère que l'image de l'objet est l'ensemble des éléments obtenus par régression et l'on affiche cette image 74 au moyen d'un moniteur vidéo 76 qui est relié à un ordinateur 78 ayant permis de faire tous les calculs et traitements informatiques de caractérisation.

Dans le cas contraire, on va au bloc IX dont le sous-bloc 80 symbolise le découpage des éléments en nouveaux éléments et le sous-bloc 82 symbolise les nouveaux éléments, les nouvelles variables et les valeurs indéterminées résultant de ce découpage.

A partir de ces nouveaux éléments, nouvelles variables et valeurs indéterminées (sous-bloc 82), on recommence le procédé à partir du sous-bloc 66 du bloc IV.

On précise que l'on voit aussi sur la figure 9 un exemple du dispositif objet de l'invention, comprenant la source lumineuse 54, le réflectomètre 56, l'ellipsomètre 58, le spectromètre 60, l'ordinateur 78 qui est muni du moniteur vidéo 76, l'ordinateur 78 ayant en mémoire la bibliothèque 64 et traitant les données fournies par le spectromètre 60, en mettant en oeuvre le procédé conforme à l'invention, qui vient d'être décrit en faisant référence aux blocs I à IX.

Dans les exemples de l'invention qui ont été donnés plus haut, on a utilisé, en tant que réponse optique, l'image réfléchie d'une structure à caractériser, cette image résultant de la réflexion d'une lumière par cette structure. Cependant, on peut également mettre en oeuvre l'invention en utilisant, en tant que réponse optique, l'image diffractée d'une structure, résultant de la diffraction d'une lumière par cette structure.

De plus, des exemples de l'invention ont été donnés en utilisant des rectangles et des trapèzes en tant qu'éléments de base. Cependant, on peut également mettre en oevre l'invention en utilisant un carré en tant qu'élément de base et la longueur du côté de ce carré en tant que paramètre géométrique.

On peut aussi utiliser un triangle en tant qu'élément de base et, en tant que paramètres géométriques, la base, un angle adjacent à cette base et la hauteur de ce triangle, ou la base et deux angles adjacents à cette dernière.

Les documents cités dans la présente description sont les suivants :

[1] B. K. Minhas, S. A. Coulombe, S. Sohail, H. Naqvi et J. R. McNeil, Ellipsometric scatterometry for the metrology of sub-0.1 μm, Applied Optics, 37 (22), pages 5112 à 5115, 1998

[2] Thomas K. Gaylord et M. G. Moharam, Analysis and applications of optical diffraction by gratings, Proceedings of the IEEE, 73(5), 1985

[3] L. C. Botten, M. Cadihac, G. H. Derrick, D. Maystre, R. C. McPhedran, M. Nevière, R. Petit et P. Vincent, Electromagnetic Theory of Gratings, Topics in Current Physics, Springer-Verlag Berlin Heidelberg New York, R.Petit Edition, 1980

[4] H. Press, A. Teukolsky, T. Vetterling et P. Flannery, Numerical Recipes in C, Cambridge University Press, 1992

[5] E. M. Drège, J. A. Reed et D. M. Byrne, Linearized inversion of scatterometric data to obtain surface profile information, *Opt. Eng.,* 41(1), pages 225 à 236, janvier 2002

[6] Evgeni Popov et Michel Nevière, Grating theory : new equations in Fourier space leading to fast converging results for TM polarization, J. Opt. Soc. Am. A, vol. 17, n° 10, octobre 2000, pages 1773 à 1784.

## Revendications

1. Procédé de caractérisation géométrique d'une structure (50), dans lequel on éclaire la structure, cette structure fournissant alors une réponse optique, ce procédé permettant d'obtenir une image bidimensionnelle ou tridimensionnelle de la structure à partir de la réponse optique de cette structure, ce procédé étant **caractérisé en ce qu'**il comprend les étapes successives suivantes :

   1) on acquiert la réponse optique de la structure,
   2) on définit une structure géométrique élémentaire, appelée élément de base, apte à permettre la décomposition de la structure à caractériser en un ou plusieurs éléments de base (30),
   3) on détermine au moins un paramètre géométrique de l'élément de base et l'on attribue une valeur à chaque paramètre géométrique,
   4) on met en oeuvre une régression des valeurs du ou des paramètres géométriques de l'élément de base à partir d'un algorithme de régression apte à déterminer des valeurs modifiées de ce ou ces paramètres géométriques, en vue de rendre l'écart entre la réponse optique théorique (32) de l'élément de base, dont on a déterminé le ou les paramètres géométriques, et la réponse optique acquise (34) de la structure au plus égal à une valeur de seuil déterminée, et
   5) si cet écart entre la réponse optique théorique et la réponse optique acquise est supérieur à cette valeur de seuil, on réalise une nouvelle subdivision d'un ou plusieurs éléments de base en au moins deux autres éléments de base, et pour chaque élément de base on recommence le procédé à partir de l'étape 3) de celui-ci, si l'écart est inférieur ou égal à la valeur de seuil on assemble l'ensemble des éléments de base avec les valeurs déterminées de leurs paramètres géométriques pour obtenir une image de la structure (50), et si l'écart est supérieur à la valeur de seuil on recommence le procédé à l'étape 5).

2. Procédé selon la revendication 1, dans lequel la réponse optique de la structure est un spectre ellipsométrique ou réflectométrique ou goniométrique ou une image de cette structure.

3. Procédé selon l'une quelconque des revendications 1 et 2, dans lequel l'élément de base est choisi parmi les carrés, les rectangles, les trapèzes et les triangles ou tout autre élément de base apte à permettre la décomposition de la structure.

4. Procédé selon la revendication 3, dans lequel l'élément de base est un carré et l'on utilise la longueur des côtés de ce carré en tant que paramètre géométrique.

5. Procédé selon la revendication 3, dans lequel l'élément de base est un rectangle et l'on utilise la longueur et/ou la largeur de ce rectangle en tant que paramètres géométriques.

6. Procédé selon la revendication 3, dans lequel l'élément de base est un trapèze et l'on utilise la hauteur et/ou au moins une des longueurs respectives des grande et petite bases de ce trapèze en tant que paramètres géométriques.

7. Procédé selon la revendication 3, dans lequel l'élément de base est un triangle et l'on utilise la base et/ou un angle adjacent à cette dernière et/ou la hauteur de ce triangle, ou la base et/ou au moins un des deux angles adjacents à cette dernière, en tant que paramètres géométriques.

8. Procédé selon l'une quelconque des revendications 1 à 7, dans lequel on utilise une méthode d'analyse rigoureuse des ondes couplées ou une méthode différentielle pour déterminer la réponse optique théorique de l'élément de base.

9. Dispositif de caractérisation géométrique d'une structure, ce dispositif comprenant :

- des moyens (54) pour éclairer la structure (50), cette structure fournissant alors une réponse optique, et
- des moyens (56, 58, 60, 78) pour détecter et traiter cette réponse optique,

ce dispositif étant **caractérisé en ce que** les moyens pour détecter et traiter la réponse optique sont prévus pour effectuer les étapes successives suivantes :

1) acquérir la réponse optique de la structure,
2) définir une structure géométrique élémentaire, appelée élément de base, apte à permettre la décomposition de la structure (50) à caractériser en un ou plusieurs éléments de base,
3) déterminer au moins un paramètre géométrique de l'élément de base et attribuer une valeur à chaque paramètre géométrique,
4) mettre en oeuvre une régression des valeurs du ou des paramètres géométriques de l'élément de base à partir d'un algorithme de régression apte à déterminer des valeurs modifiées de ce ou ces paramètres géométriques, en vue de rendre l'écart entre la réponse optique théorique de l'élément de base, dont on a déterminé le ou les paramètres géométriques, et la réponse optique acquise de la structure au plus égal à une valeur de seuil déterminée, et
5) si cet écart entre la réponse optique théorique et la réponse optique acquise est supérieur à cette valeur de seuil, réaliser une nouvelle subdivision d'un ou plusieurs éléments de base en au moins deux autres éléments de base, et pour chaque élément de base recommencer les étapes à partir de l'étape 3), si l'écart est inférieur ou égal à la valeur de seuil, assembler l'ensemble des éléments de base avec les valeurs déterminées de leurs paramètres géométriques pour obtenir une image de la structure (50), et si l'écart est supérieur à la valeur de seuil recommencer les étapes à partir de l'étape 5).

FIG. 1

FIG. 2A

FIG. 2B

FIG. 3

FIG. 4

FIG. 5A

FIG. 5B

FIG. 5C

FIG. 5D

FIG. 6

FIG. 7A

FIG. 7B

FIG. 7C

FIG. 7D

FIG. 7E

FIG. 7F

FIG. 8A

48

FIG.8B

FIG. 8C

FIG. 8D

FIG. 8E

FIG. 8F

48

# FIG. 9

**Office européen des brevets**

**RAPPORT DE RECHERCHE EUROPEENNE**

Numéro de la demande

EP 05 10 1908

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2003/200063 A1 (NIU XINHUI ET AL) 23 octobre 2003 (2003-10-23) * alinéas 19,20,30,31,42,43,48-52,55,58-63,83,84,182,183,18 - page 5 * * revendications 24,27,30,34 * * figures 1,9,10a,10b,10c,16a,16b,16c,16d * ----- | 1-9 | G01B11/00 H01L21/66 |
| A | US 5 963 329 A (CONRAD EDWARD W ET AL) 5 octobre 1999 (1999-10-05) * le document en entier * ----- | 1-9 | |
| A | WO 2004/008069 A (LARSEN NIELS AGERSNAP ; HANSEN POUL-ERIK (DK); LUKA OPTOSCOPE APS (DK)) 22 janvier 2004 (2004-01-22) * le document en entier * ----- | 1-9 | |

DOMAINES TECHNIQUES RECHERCHES (Int.Cl.7)

H01L
G03F
G06F
G01N
G01B

Le présent rapport a été établi pour toutes les revendications

| Lieu de la recherche | Date d'achèvement de la recherche | Examinateur |
|---|---|---|
| Munich | 13 juin 2005 | Grand, J-Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 1 574 816 A1**

**ANNEXE AU RAPPORT DE RECHERCHE EUROPEENNE
RELATIF A LA DEMANDE DE BREVET EUROPEEN NO.**

EP 05 10 1908

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

13-06-2005

| Document brevet cité au rapport de recherche | Date de publication | Membre(s) de la famille de brevet(s) | Date de publication |
|---|---|---|---|
| US 2003200063 A1 | 23-10-2003 | WO 03063053 A1 | 31-07-2003 |
| US 5963329 A | 05-10-1999 | AUCUN | |
| WO 2004008069 A | 22-01-2004 | AU 2003236819 A1<br>WO 2004008069 A1<br>EP 1527320 A1 | 02-02-2004<br>22-01-2004<br>04-05-2005 |

EPO FORM P0460